# FASCICULE DE BREVET EUROPEEN

(11) **EP 3 523 553 B1**
(45) Date de publication et mention de la délivrance du brevet: **04.11.2020**
(21) Numéro de dépôt: 17784356.2
(22) Date de dépôt: 20.09.2017
(51) Int. Cl.: F16F 1/373, F16F 1/38

(54) **CALE ALLEGEE POUR GROUPE MOTOPROPULSEUR APTE A LIMITER DES EFFORTS VERTICAUX**
LEICHTE UNTERLEGSCHEIBE FÜR EINEN ANTRIEBSSTRANG ZUR BEGRENZUNG VON VERTIKALEN KRÄFTEN
LIGHTWEIGHT SHIM FOR A POWERTRAIN CAPABLE OF LIMITING VERTICAL FORCES

(30) Priorité: 06.10.2016 FR 1659630
(43) Date de publication de la demande: 14.08.2019
(73) Titulaire: PSA Automobiles SA, 78300 Poissy (FR); Cooper Standard France, 35043 Rennes Cedex (FR)
(72) Inventeur: CHALVET, Manuel, 75015 Paris 15 (FR); KREIS, Adrien, 92250 La Garenne Colombes (FR); HERCOUET, Roland, 35310 Breal sous Montfort (FR); VIVION, Aurelien, 35200 Rennes (FR)
(86) Numéro de dépôt international: PCT/FR2017/052519
(87) Numéro de publication internationale: WO 2018/065689

(56) Documents cités:
- DE-A1-102007 032 957
- DE-A1-102010 015 882
- US-A1- 2006 091 594

## Description

La présente invention porte sur une cale allégée pour groupe motopropulseur, notamment de véhicule automobile, apte à limiter des efforts verticaux. On rappelle que le groupe motopropulseur est constitué notamment du moteur thermique et de la boîte de vitesses du véhicule.

De façon connue en soi, les groupes motopropulseurs transversaux sont fixés à l'aide d'une architecture dite pendulée. Une telle architecture est constituée de cales porteuses fixées sur le brancard ayant pour fonction de reprendre la masse du groupe motopropulseur et les efforts verticaux subis par celui-ci, ainsi que d'une biellette anti-couple reliant le groupe motopropulseur à un berceau chargée de reprendre le couple du groupe motopropulseur suivant l'axe du véhicule.

Il est connu d'utiliser une armature de cale réalisée en tôle emboutie et fixée sur le brancard par l'intermédiaire de vis suivant une direction verticale. Pour des raisons d'allégement, il est envisagé de réaliser des cales en matériau thermoplastique. Cependant, sur certaines applications, le matériau thermoplastique ne permet pas d'assurer la tenue mécanique requise pour les chocs. En effet, la pièce intermédiaire liée à la boîte de vitesses vient contraindre la cale en son centre, ce qui engendre des efforts importants difficilement supportables par une partie réalisée dans un matériau thermoplastique.

Par ailleurs, pour des raisons d'environnement sous capot et de cinématique de montage, des inserts métalliques sont intégrés dans les ouvertures de la pièce thermoplastique. Or, l'épaisseur des inserts est plus importante que la pièce en tôle à remplacer, ce qui pose des problèmes de fixation.

On connait encore le document US2006091594A1 correspondant au préambule de la revendication 1.

L'invention vise à remédier efficacement à ces inconvénients en proposant une cale pour groupe motopropulseur, notamment de véhicule automobile, comportant:
- deux inserts comportant chacun une interface de fixation avec un élément structurel du véhicule automobile,
- une partie réalisée dans un matériau thermoplastique assurant une liaison entre les inserts et une pièce élastique, et
- un limiteur muni d'un moyen de fixation avec une pièce intermédiaire destinée à être fixée au groupe motopropulseur,
- le limiteur comportant des extrémités superposées avec une partie des inserts suivant une direction verticale,
- le limiteur venant en appui contre les inserts via la partie thermoplastique lors de l'application d'un effort vertical.

On considère que, pour une cale installée sur un véhicule en conditions de fonctionnement sur un plan horizontal, la direction verticale est sensiblement perpendiculaire au plan défini par l'axe longitudinal du véhicule et un axe perpendiculaire à l'axe longitudinal qui est sensiblement parallèle à une direction des essieux du véhicule.

L'invention permet ainsi, grâce à l'utilisation en combinaison de la partie thermoplastique et des inserts, de réduire le poids de la cale tout en conservant les mêmes conditions d'implantation et de montage que la pièce en tôle remplacée. En outre, la configuration du limiteur venant en appui indirect contre les inserts lors de l'application d'un effort vertical permet d'augmenter la tenue mécanique de la cale.

Selon une réalisation, un noyau est interposé entre le limiteur et la pièce élastique.

Selon une réalisation, au moins une contreforme est ménagée sur chaque insert de manière à ce que le limiteur vienne en appui sur la contreforme lors d'une application d'un effort transversal.

Selon une réalisation, la contreforme est constituée par une partie emboutie ou pliée de chaque insert.

Selon une réalisation, la contreforme est constituée par une pièce rapportée, de type goupille ou autre, fixée sur l'insert.

Selon une réalisation, la partie thermoplastique est surmoulée sur un renfort fibres continues reliant les inserts entre eux.

Selon une réalisation, le renfort fibres continues passe autour de deux rebords appartenant chacun à un insert correspondant.

Selon une réalisation, la pièce élastique est réalisée dans un matériau élastomère.

L'invention a également pour objet un véhicule automobile comportant un brancard et un groupe motopropulseur muni d'une boîte de vitesses fixée au brancard au moyen d'une cale telle que précédemment définie.

L'invention sera mieux comprise à la lecture de la description qui suit et à l'examen des figures qui l'accompagnent. Ces figures ne sont données qu'à titre illustratif mais nullement limitatif de l'invention.
Les figures 1a et 1b sont respectivement des vues en perspective et en perspective éclatée de la cale pour groupe motopropulseur de véhicule automobile selon la présente invention;
Les figures 2a et 2b sont respectivement des vues de dessus et de côté de la cale pour groupe motopropulseur de véhicule automobile selon l'invention illustrant par transparence le positionnement du limiteur par rapport aux inserts;
La figure 3 est une vue en perspective de la cale pour groupe motopropulseur de véhicule automobile selon l'invention sans la partie thermoplastique ni la partie élastique illustrant la réalisation de contre formes dans les inserts;
Les figures 4a, 4b, et 4c sont différentes vues en perspective de la cale pour groupe motopropulseur de véhicule automobile selon l'invention montée sur un brancard du véhicule automobile.

Les éléments identiques, similaires ou analogues conservent la même référence d'une figure à l'autre.

Dans la description qui suit, on considère que, pour une cale installée sur un véhicule en conditions de fonctionnement sur un plan horizontal, l'axe X correspond à l'axe longitudinal du véhicule, l'axe Y correspond à un axe perpendiculaire à l'axe X et sensiblement parallèle à une direction d'allongement des essieux du véhicule, et l'axe vertical Z est sensiblement perpendiculaire au plan défini par les axes X et Y.

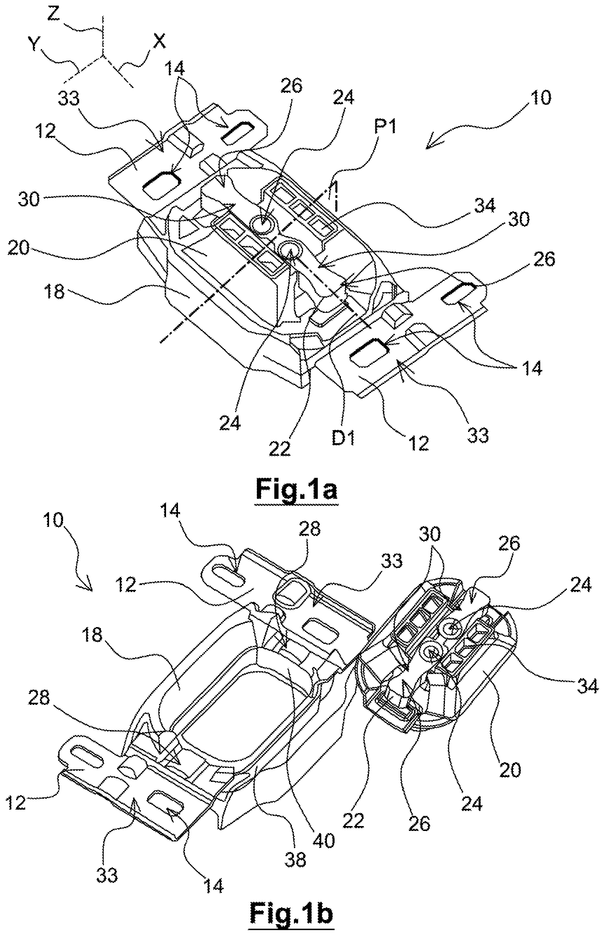

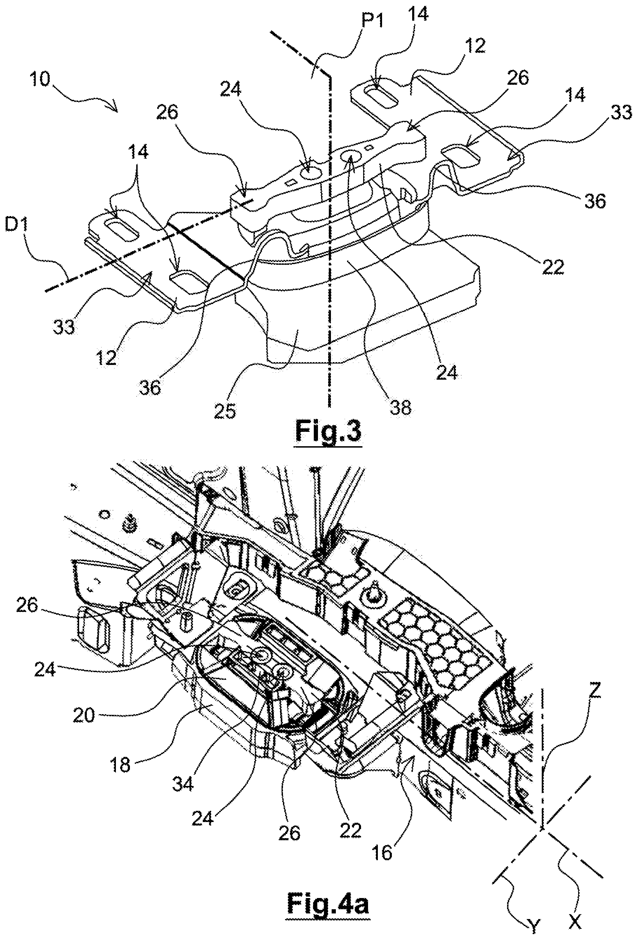

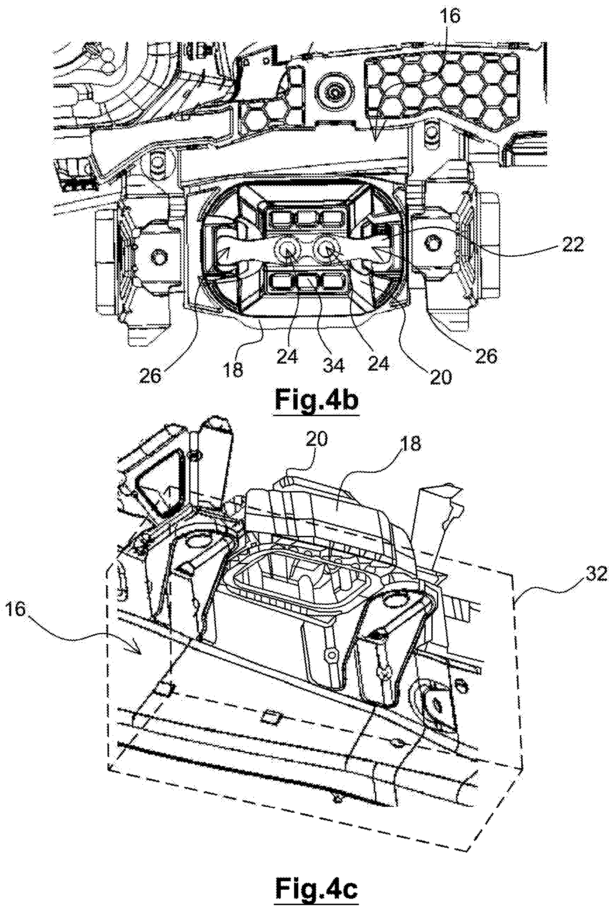

La figure 1a montre une cale 10 pour groupe motopropulseur de véhicule automobile. La cale 10 comprend deux inserts 12 réalisés de préférence dans un matériau à base de métal comportant chacun une interface de fixation 14 avec un élément structurel du véhicule, en l'occurrence un brancard 16 montré sur les figures 4a à 4c. Ce brancard 16 s'étend longitudinalement suivant l'axe X. Les inserts 12 présente une épaisseur fine comprise entre 1 et 7 mm, de préférence entre 2 et 5 mm.

Une partie 18 réalisée dans un matériau thermoplastique assure une liaison entre les inserts 12 et une pièce élastique 20 réalisée par exemple dans un matériau élastomère. En outre, un limiteur 22 est muni d'ouvertures 24 pour le passage d'organes de fixation, notamment des vis, pour permettre la fixation indirecte de la cale 10 au groupe motopropulseur.

En effet, le limiteur 22 est fixé à une pièce intermédiaire 25 visible en figure 3, laquelle est fixée à la boîte de vitesses 32 du véhicule (cf. figure 4c). La boîte de vitesses 32, qui est ainsi suspendue, se situe sous la pièce intermédiaire 25. Le limiteur 22 pourra par exemple être réalisé en aluminium extrudé, tandis que la pièce intermédiaire 25 pourra par exemple être réalisée en aluminium de fonderie.

Un noyau 34, réalisé de préférence dans un matériau thermoplastique, est interposé entre le limiteur 22 et la pièce élastique 20. Le limiteur 22 pourra être rendue solidaire du noyau 34 par emmanchement ou encliquetage dans le noyau 34. La pièce élastique 20 permet ainsi d'assurer un découplage mécanique et vibratoire entre la boîte de vitesses 32 et l'élément structurel 16.

Pour réaliser la cale 10, la pièce élastique 20 pourra par exemple être surmoulée autour de l'ensemble limiteur 22-noyau 34, puis la partie thermoplastique 18 est surmoulée autour des inserts 12 et de l'ensemble limiteur 22-noyau 34-pièce élastique 20 afin de solidariser les différents éléments entre eux.

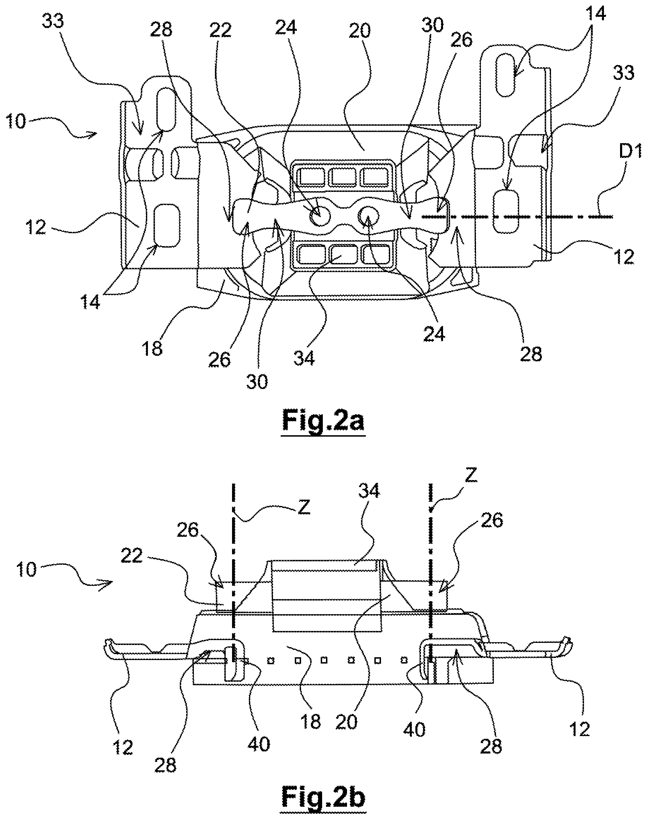

Plus précisément, le limiteur 22 présente une forme allongée suivant une direction D1 sensiblement parallèle à la direction d'allongement longitudinal X du brancard 16 (cf. figures 2a et 3). Le limiteur 22 est formé de deux portions 26 reliées entre elles et comportant chacune une ouverture 24 pour le passage d'un organe de fixation correspondant. Ces deux portions 26 sont sensiblement symétriques ou sensiblement symétriques par rapport à un plan transversal P1. Les ouvertures 24 sont positionnées au centre du limiteur 22 de part et d'autre du plan de symétrie P1. Chaque portion 26 du limiteur 22 présente en l'occurrence une réduction de section dans sa zone intermédiaire 30.

Avantageusement, comme cela est illustré par les figures 2a et 2b, les extrémités du limiteur 22 de forme allongée sont superposées avec une partie 28 des inserts 12 suivant une direction verticale correspondant à la direction Z. A cet effet, les inserts 12 présentent en vue de dessus une forme en L. Les inserts 12 comportent ainsi des portions 28 dirigées l'une vers l'autre en direction du limiteur 22 sur lesquelles est surmoulée la partie thermoplastique 18. Les inserts 12 sont superposés verticalement avec une partie de ces portions 28.

Ainsi, lors de l'application d'un effort vertical suivant la direction Z, le limiteur 22 vient en appui contre les inserts 12 via la partie thermoplastique 18, ce qui permet de reprendre une partie des efforts. Les parties 28 des inserts 12 dirigées vers le limiteur 22 se situent dans le prolongement de parties 33 s'étendant perpendiculairement par rapport à la direction d'allongement longitudinale D1 du limiteur 22.

Les interfaces de fixation 14 des inserts 12 sont réalisées dans ces parties 33. Les interfaces de fixation 14 sont constituées, par exemple, par des ouvertures oblongues, cylindriques ou de formes différentes encore, dans lesquelles sont insérées des vis de fixation pour fixer les inserts 12 sur le brancard 16 correspondant. Cela permet de conserver les mêmes conditions d'implantation et de montage que la pièce en tôle remplacée, en utilisant les mêmes vis, et la même cinématique de montage que les systèmes existants.

Une contre forme 36 est avantageusement ménagée sur chaque insert 12 de sorte que le limiteur 22 vienne en appui sur les contre formes 36 lors de l'application d'un effort transversal suivant l'axe Y. En effet, lors d'un choc, la partie élastique 20 se déforme jusqu'à ce que le limiteur 22 vienne en appui contre les contre formes 36 des inserts 12. Ces contre formes 36 constituent des saillies suivant l'axe Z s'étendant en direction du limiteur 22. Les contre formes 36 sont positionnées en regard d'une face latérale du limiteur 22 s'étendant entre les deux extrémités longitudinale du limiteur 22.

Les contre formes 36 des inserts 12 permettent ainsi de récupérer une partie des efforts latéraux lors d'un choc par un contact entre le limiteur 22 et les inserts 12, et ainsi limiter la transmission des efforts de la pièce intermédiaire 25 sur la partie thermoplastique 18. Autrement dit, une partie des efforts latéraux est répartie entre le limiteur 22 et les contre formes 36 des inserts 12 (transmission métal/métal) et la pièce intermédiaire 25 et la partie thermoplastique 18 de la cale 10 (transmission métal /thermoplastique).

Dans l'exemple de réalisation de la figure 3, chaque insert 12 comporte une contre forme 36 unique située du côté de la boîte de vitesses 32, c'est-à-dire du côté opposé au brancard 16. On empêche ainsi la boîte de vitesses 32 de s'éloigner du brancard 16 en cas de choc suivant l'axe Y. Du côté du brancard 16, il n'est pas nécessaire de prévoir une contre forme 36 dans les inserts 12, dans la mesure où la boîte de vitesses 32 est retenue par le brancard 16.

En variante, dans d'autres applications pour lesquelles il est nécessaire de contrôler les efforts des deux côtés du limiteur 22, des contre formes 36 pourront être positionnées de part et d'autre du limiteur 22. Chaque insert 12 comporte alors deux contre formes 36. Le nombre des contre formes 36 pourra ainsi être adapté en fonction de l'application.

Les contre formes 36 pourront être obtenues par emboutissage ou pliage de la tôle. En variante, les contre formes 36 sont constituées par une pièce rapportée, de type goupille ou autre, fixée sur l'insert 12.

Suivant un mode de réalisation particulier, un renfort en fibres continues 38 relie les deux inserts 12 entre eux, comme cela est bien visible sur la figure 1b. A cet effet, la partie thermoplastique 18 et le renfort en fibres continues 38 passent autour des rebords 40 appartenant chacun à un insert 12 correspondant. Ces rebords 40 s'insèrent ainsi à l'intérieur de la partie thermoplastique 18 et du renfort en fibres continues 38. Ces rebords 40 sont dirigés verticalement du côté opposé du limiteur 22.

Ces rebords 40 issus de la partie 28 pourront présenter une forme incurvée suivant l'enroulement du renfort en fibres continues 38 autour de la face externe de ces rebords 40. Ces rebords 40 pourront être obtenus pas pliage, emboutissage, ou résulter d'un assemblage mécano-soudé.

Les fibres continues sont des fibres de renforcement et le renfort est de préférence préfabriqué, c'est-à-dire que les fibres continues sont munies d'un liant assurant leur cohésion. Le préfabriqué est par exemple obtenu par enroulement, drapage, ou à l'aide d'un équipement de placement de fibres. Le préfabriqué est donc préparé avant son incorporation dans la cale 10. Le liant du renfort est de préférence également de type thermoplastique.

Le matériau thermoplastique de la partie 18 est surmoulé autour des rebords 40 et le renfort en fibres continues 38 afin d'assurer la liaison de l'ensemble. Le renfort en fibres continues 38 est ainsi noyé dans le matériau thermoplastique. Le renfort en fibres continues 38 est composé par exemple de thermoplastique et de fibres de verre ou de carbone. La partie thermoplastique 18 et le noyau 34 pourront par exemple être réalisé dans un matériau thermoplastique de type polyamide renforcé, de fibres de verre ou de carbone.

Le renfort en fibres continues 38 permet d'augmenter la tenue mécanique lors d'un choc longitudinal ainsi que la raideur de l'armature de la pièce.

## Revendications

1. Cale (10) pour groupe motopropulseur, notamment de véhicule automobile, comportant :
- deux inserts (12) comportant chacun une interface de fixation (14) avec un élément structurel (16) dudit véhicule automobile,
- une partie (18) réalisée dans un matériau thermoplastique assurant une liaison entre lesdits inserts (12) et une pièce élastique (20), et
- un limiteur (22) de forme allongée et muni d'un moyen de fixation (24) avec une pièce intermédiaire (25) destinée à être fixée audit groupe motopropulseur,
- ledit limiteur (22) comportant des extrémités (26) superposées avec une partie (28) desdits inserts (12) suivant une direction verticale (Z),
**caractérisée en ce que** le limiteur (22) vient en appui contre les inserts (12) via la partie thermoplastique (18) lors de l'application d'un effort vertical (Z).

2. Cale selon la revendication 1, **caractérisée en ce qu'**un noyau (34) est interposé entre ledit limiteur (22) et ladite pièce élastique (20).

3. Cale selon la revendication 1 ou 2, **caractérisée en ce qu'**au moins une contre forme (36) est ménagée sur chaque insert (12) de manière à ce que ledit limiteur (22) vienne en appui sur ladite contre forme (36) lors d'une application d'un effort transversal (Y).

4. Cale selon la revendication 3, **caractérisée en ce que** ladite contre forme (36) est constituée par une partie emboutie ou pliée de chaque insert (12).

5. Cale selon la revendication 3, **caractérisée en ce que** ladite contre forme (36) est constituée par une pièce rapportée, de type goupille ou autre, fixée sur ledit insert (12).

6. Cale selon l'une quelconque des revendications 1 à 5, **caractérisée en ce que** ladite partie thermoplastique (18) est surmoulée sur un renfort fibres continues (38) reliant lesdits inserts (12) entre eux.

7. Cale selon la revendication 6, **caractérisée en ce que** ledit renfort fibres continues (38) passe autour de deux rebords (40) appartenant chacun à un insert (12) correspondant.

8. Cale selon l'une quelconque des revendications 1 à 7, **caractérisée en ce que** ladite pièce élastique (20) est réalisée dans un matériau élastomère.

9. Véhicule automobile **caractérisé en ce qu'**il comporte un brancard (16) et un groupe motopropulseur muni d'une boîte de vitesses (32) fixée audit brancard (16) au moyen d'une cale (10) telle que définie selon l'une quelconque des revendications 1 à 8.

## Patentansprüche

1. Keil (10) für einen Antriebsstrang, insbesondere für ein Kraftfahrzeug, umfassend:
- zwei Einsätze (12), die jeweils eine Befestigungsschnittstelle (14) mit einem Strukturelement (16) des Kraftfahrzeugs umfassen;
- ein Teil (18) aus einem thermoplastischen Material, das eine Verbindung zwischen den Einsätzen (12) und einem elastischen Teil (20) herstellt, und
- einen Begrenzer (22) mit länglicher Form, der mit einem Befestigungsmittel (24) mit einem Zwischenstück (25) versehen ist, das an dem Antriebsstrang befestigt werden soll;
- den Begrenzer (22), der Enden (26) umfasst, die mit einem Teil (28) der Einsätze (12) in vertikaler Richtung (Z) überlagert sind,
**dadurch gekennzeichnet, dass** der Begrenzer (22) über den thermoplastischen Teil (18) beim Aufbringen einer Vertikalkraft (Z) gegen die Einsätze (12) drückt.

2. Keil nach Anspruch 1, **dadurch gekennzeichnet, dass** zwischen dem Begrenzer (22) und dem elastischen Teil (20) ein Kern (34) angeordnet ist.

3. Keil nach Anspruch 1 oder 2, **dadurch gekennzeichnet, dass** an jedem Einsatz (12) mindestens eine Gegenform (36) vorgesehen ist, so dass der Begrenzer (22) währenddessen auf die Gegenform (36) einwirkt einer Anwendung einer Querkraft (Y).

4. Keil nach Anspruch 3, **dadurch gekennzeichnet, dass** die Gegenform (36) aus einem geprägten oder gebogenen Teil jedes Einsatzes (12) besteht.

5. Keil nach Anspruch 3, **dadurch gekennzeichnet, dass** die Gegenform (36) aus einem zusätzlichen Teil eines Stifts oder eines anderen Typs besteht, der an dem Einsatz (12) befestigt ist.

6. Keil nach einem der Ansprüche 1 bis 5, der **dadurch gekennzeichnet ist, dass** der thermoplastische Teil (18) auf eine durchgehende Faserverstärkung (38) geformt ist, die die Einsätze (12) miteinander verbindet.

7. Keil nach Anspruch 6, **dadurch gekennzeichnet, dass** die durchgehende Faserverstärkung (38) um zwei Flansche (40) herumgeht, die jeweils zu einem entsprechenden Einsatz (12) gehören.

8. Keil nach einem der Ansprüche 1 bis 7, **dadurch gekennzeichnet, dass** der elastische Teil (20) aus einem Elastomermaterial besteht.

9. Kraftfahrzeug, das **dadurch gekennzeichnet ist, dass** es eine Trage (16) und eine Antriebseinheit umfasst, die mit einem Getriebe (32) versehen ist, das an der Trage (16) mittels eines Keils (10) befestigt ist, wie er gemäß einem definiert ist Ansprüche 1 bis 8.

## Claims

1. Wedge (10) for a power train, in particular for a motor vehicle, comprising:
- two inserts (12) each comprising a fixing interface (14) with a structural element (16) of said motor vehicle,
- a part (18) made of a thermoplastic material providing a connection between said inserts (12) and an elastic part (20), and
- a limiter (22) of elongated shape and provided with a fastening means (24) with an intermediate piece (25) intended to be fixed to said powertrain,
- said limiter (22) comprising ends (26) superimposed with a part (28) of said inserts (12) in a vertical direction (Z),
**characterized in that** the limiter (22) comes to rest against the inserts (12) via the thermoplastic part (18) during the application of a vertical force (Z).

2. Shim according to Claim 1, **characterized in that** a core (34) is interposed between said limiter (22) and said elastic part (20).

3. Wedge according to claim 1 or 2, **characterized in that** at least one against form (36) is provided on each insert (12) so that said limiter (22) bears on said against form (36) when applying a transverse force (Y).

4. Wedge according to claim 3, **characterized in that** said counter-form (36) consists of a stamped or folded part of each insert (12).

5. Wedge according to claim 3, **characterized in that** said counter-form (36) is constituted by an attached part, of pin type or other, fixed to said insert (12).

6. Wedge according to any one of claims 1 to 5, **characterized in that** said thermoplastic part (18) is molded onto a continuous fiber reinforcement (38) connecting said inserts (12) to one another.

7. Wedge according to claim 6, **characterized in that** said continuous fiber reinforcement (38) passes around two flanges (40) each belonging to a corresponding insert (12).

8. Wedge according to any one of claims 1 to 7, **characterized in that** said elastic part (20) is made of an elastomeric material.

9. Motor vehicle **characterized in that** it comprises a stretcher (16) and a drive unit provided with a gearbox (32) fixed to said stretcher (16) by means of a wedge (10) as defined according to I any of claims 1 to 8.
